# EUROPÄISCHE PATENTSCHRIFT

(11) **EP 2 440 753 B1**
(45) Veröffentlichungstag und Bekanntmachung des Hinweises auf die Patenterteilung: **28.10.2015**
(21) Anmeldenummer: 10723941.0
(22) Anmeldetag: 08.06.2010
(51) Int. Cl.: F01L 1/047, F16D 1/10

(54) **GEBAUTE NOCKENWELLE FÜR VENTILGESTEUERTE BRENNKRAFTMASCHINEN**
CONSTRUCTED CAMSHAFT FOR VALVE CONTROLLED INTERNAL COMBUSTION ENGINES
ARBRE À CAMES ASSEMBLÉ POUR MOTEURS À COMBUSTION INTERNE À COMMANDE PAR SOUPAPES

(30) Priorität: 10.06.2009 DE 102009024455
(43) Veröffentlichungstag der Anmeldung: 18.04.2012
(73) Patentinhaber: Audi AG, 85045 Ingolstadt (DE)
(72) Erfinder: DOLLINGER, Peter, 85049 Ingolstadt (DE); THOMAS, Schimmer, 85051 Ingolstadt (DE)
(74) Vertreter: Geissler, Manfred
(86) Internationale Anmeldenummer: PCT/EP2010/003412
(87) Internationale Veröffentlichungsnummer: WO 2010/142408

(56) Entgegenhaltungen:
- EP-A1- 0 340 128
- EP-A1- 1 900 951
- DE-A1- 3 525 186
- DE-A1-102007 010 149
- JP-A- 11 108 070

## Beschreibung

Die Erfindung betrifft eine gebaute Nockenwelle für ventilgesteuerte Brennkraftmaschinen gemäß dem Oberbegriff des Patentanspruches 1.

Bei Brennkraftmaschinen mit variabler Ventilsteuerung und/oder Abschaltung einzelner Zylinder sind Konstruktionen bekannt, bei denen auf der Nockenwelle axial verschiebbare Nocken oder Nockenpaare verwendet sind, die zum Beispiel zwei verschiedene Nockenkonturen je Hubventil tragen und somit durch deren Umschalten unterschiedliche Steuerzeiten bewirken. Ist eine der Konturen kreissymmetrisch (Nockengrundkreis), so kann das Hubventil auch stillgesetzt werden. Sind derartige "Schaltnocken" mit nicht umschaltbaren Festnocken kombiniert, so sind beide Varianten schon aus montagetechnischen Gründen als gebaute Version auszuführen, zum Beispiel über Steckverzahnungen, die bei einer einfachen Montage eine zuverlässige Übertragung des Antriebsmomentes und eine adäquate Abstützung der auftretenden Wechselmomente sicherstellen. Da zum Beispiel eine derartige Steckverzahnung Spiel aufweist, kann es im Motorbetrieb zu erheblichen Lärmemissionen kommen. Diese Lärmemissionen sind insbesondere durch das auf die Steckverzahnung wirkende Wechselmoment bedingt, das durch zum Beispiel Ventil- und Pumpnocken erzeugt wird.

Sowohl aus der DE 197 10 847 C2 als auch der DE 37 17 190 A1 ist es bereits bekannt, nockentragende Nabengrundkörper spanabhebend auf eine Welle aufzuschieben. Eine derartige Verbindung weist jedoch den Nachteil auf, dass durch die Spanbildung das übertragbare Drehmoment verringert wird, da Werkstoff aus dem Fügespalt herausgebrochen wird und damit nicht mehr zum Formschluss bzw. zum Spannungsaufbau und damit zum Kraftschluss beitragen kann.

Um letzteres zu vermeiden, wird in der EP 1 741 945 A1 vorgeschlagen, eine Nabenkörperausnehmung mit einem kreisrunden Querschnitt und einer absolut glatten Ausnehmungsoberfläche auszubilden. Die Welle, die mit dem Nabenkörper verbunden werden soll, wird in dem Verbindungsbereich mittels eines speziellen Rändelverfahren auf einen solchen Durchmesser aufgeweitet, dass sich auf der Wellenaußenseite Erhebungen und Vertiefungen ausbilden. Die Verbindung der beiden Bauteile erfolgt in der Weise, dass der Nabenkörper über den mittels des Rändelverfahrens aufgeweiteten Bereich der Welle geschoben wird und dabei eine kraft- und formschlüssige Verbindung mit der Welle eingeht. Bei dieser Umformung besteht jedoch die Gefahr, dass es zu Hohlräumen und damit zu Spannungsverlusten und damit wiederum zur Verringerung des Form- und/oder Kraftschlusses der Verbindung zwischen Welle und Nabenkörper kommen kann.

Weiter ist aus der EP 0 340 128 A1 eine Nockenwelle mit einem oder mehreren Nocken bekannt, wobei in eine nockenseitige Ausnehmung eine Welle mit einem Anfangsspiel eingesetzt wird, um das leichte Einführen der Welle zu ermöglichen. Ein plastisch verformbarer Wulstbereich bewirkt, dass der Nocken anschließend auf der Welle gehalten wird.

Demgegenüber ist es Aufgabe der Erfindung, eine gebaute Nockenwelle vorzuschlagen, mit der auf baulich einfache Weise eine unerwünschte Geräuschemission im Betrieb der Welle zuverlässig vermieden werden kann.

Diese Aufgabe wird gelöst mit den Merkmalen des Anspruchs 1. Vorteilhafte und zweckmäßige Ausgestaltungen der Erfindung sind Gegenstand der Unteransprüche.

Gemäß Anspruch 1 wird eine gebaute Nockenwelle für ventilgesteuerte Brennkraftmaschinen vorgeschlagen, bei der ein wenigstens einen Nocken aufweisender Nabenkörper mittels einer Steckverzahnung in Umfangsrichtung mittels einer Formschlussverbindung formschlüssig auf einer Welle gehalten ist, wobei die Steckverzahnung eine auf der Welle ausgebildete Wellenverzahnung aufweist, die mit einer in einer Nabenkörperausnehmung ausgebildeten Nabenkörperverzahnung zusammenwirkt. Der wenigstens eine Nabenkörper ist zusätzlich zu der umfangsseitigen Formschlussverbindung mit einem Festsitz auf der Welle gehalten, der durch einen zwischen einem Kopfkreis der Wellenverzahnung und einem Fußkreis der Nabenkörperverzahnung ausgebildeten Presssitz hergestellt ist. Erfindungsgemäß weist die Welle wenigstens eine weitere, Bestandteil einer einen Schiebesitz ausbildenden Steckverzahnung bildende Wellenverzahnung auf, mit der ein wenigstens einen Nocken aufweisender Schiebesitz-Nabenkörper über eine in der Nabenkörperausnehmung ausgebildete Nabenkörperverzahnung so zusammenwirkt, dass der Schiebesitz-Nabenkörper axial verschiebbar auf der Welle gehalten ist, wobei der wenigstens eine Festsitz-Nabenkörper und der wenigstens eine Schiebesitz-Nabenkörper gleiche oder einheitliche Verzahnungsparameter aufweisen. Unter einheitlichen Verzahnungsparametern werden hier annähernd gleiche Maße und Ausgestaltungen der jeweiligen Steckverzahnungsbereiche verstanden.

Abgesehen davon, dass mit einer derartigen erfindungsgemäßen Ausgestaltung eine axiale Sicherung des Nabenkörpers auf der Welle entfallen kann, werden besonders vorteilhaft im Wellenbetrieb auftretende Wechselmomente sehr gut abgestützt und in der Verzahnung aufgefangen, so dass keine unerwünschten Geräuschemissionen mehr auftreten können bzw. deutlich reduziert werden.

Besonders vorteilhaft und fertigungstechnisch günstig kann zur Herstellung des Festsitzes der Kopfkreisdurchmesser der Wellenverzahnung gegenüber einem Nennmaß vergrößert und/oder der Fußkreisdurchmesser der Nabenkörperverzahnung gegenüber diesem Nennmaß verkleinert sein. Damit werden die sich an sich kontaktlos gegenüberliegenden Zahnköpfe der Verzahnungen auf der Welle und die Zahnfüße der Verzahnungen am Nabenkörper so ausgeführt, dass diese im Zusammenwirken den besagten Festsitz ergeben. Die Veränderungen an den Verzahnungen und der fertigungstechnische Mehraufwand sind einfachst und unaufwendig zu realisieren.

Insbesondere kann bei der Fertigung der Verzahnungen auf der Welle und an dem Nabenkörper der Kopfkreisdurchmesser auf Passung geschliffen und der Fußkreisdurchmesser auf Passung geräumt sein. Bevorzugt sind dabei die Verzahnungen mit Festsitz auf eine Presspassung im übergangspassungsnahen Bereich gefertigt, insbesondere mit einer geringeren Überdeckung (bevorzugt auf H7/r6 oder H7/s6 oder H7/u6) gefertigt als eine ohne Steckverzahnung ausgebildete, zum Beispiel spanabhebend verbundene, und ein gleiches Betriebsmoment übertragende Welle-Nabe-Verbindung. Die relativ geringe Überdeckung stellt eine einfache Montage sicher und gewährleistet, dass die bereits maßgenau vorgefertigten Nabenkörper keine nachträgliche Verformung erleiden; trotzdem stellt sie eine ausreichende Abstützung auftretender Wechselmomente im Betrieb, insbesondere im Nockentrieb, sicher.

Bei einem Fügen der Nabenkörper mit Presssitz und im Längspressverband können die korrespondierenden Verzahnungen auf der Welle montagetechnisch besonders günstig mit einer Einlaufschräge ausgeführt sein, um das Aufschieben auf die Verzahnung zu erleichtern. Bevorzugt erfolgt dieses Aufschieben in Verbindung mit einem geeigneten Schmier- bzw. Trennmittel, das wasser- oder ölbasiert sein kann, um ein Fressen und damit eine Beschädigung des Nabenkörpers bzw. der Nabenkörperverzahnung im Rahmen der Montage beim Überschieben von solchen Festsitz-Wellenbereichen oder -abschnitten zu vermeiden, die ein identisches Festsitz-Passmaß aufweisen, wie ein dem aufzuschiebenden Nabenkörper zugeordneter und in Schieberichtung hinter dieses liegender Festsitz-Wellenbereich.

Alternativ kann bei einem Fügen im Querpressverband die Welle gekühlt werden und/oder der Nabenkörper soweit erwärmt werden, dass der Nabenkörper weitgehendst kraftfrei auf die Welle bzw. die Verzahnung aufschiebbar sind. Diese zuvor beschriebenen Montagehilfen haben zudem den Vorteil, dass, bei im Festsitz und im Schiebesitz sich abwechselnden Anordnungen der Nabenkörper, die zu fügende Nabenkörper problemlos über mehrere, in der Reihenfolge davor liegende Verzahnungen geschoben werden kann.

Zur Herstellung ist insbesondere vorgesehen, dass der Kopfkreis der Wellenverzahnung mit einer Toleranz von max. 20µm, bevorzugt von max. 6µm, höchst bevorzugt von max. 13µm, rund gefertigt, insbesondere rund geschliffen, wird. Ebenso wird der Fußkreis der Nabenkörperverzahnung gemäß dieser Verfahrensführung bevorzugt mit einer Toleranz von max. 25µm, bevorzugt von 21µm, höchst bevorzugt von 17µm, rund gefertigt, insbesondere rund geräumt. Mit einer derartigen feintoleranzbehafteten Herstellungsweise kann eine die zuvor genannten Bedingungen hervorragend erfüllende gebaute Nockenwelle hergestellt werden. Der Kopfkreis der Wellenverzahnung und der Fußkreis der Nabenkörperverzahnung sind dabei bevorzugt mit einem gleichen Nennmaß gefertigt bzw. im Hinblick auf ein gleiches Nennmaß ausgelegt.

Ein Ausführungsbeispiel der Erfindung wird im Folgenden anhand der beiliegenden, schematischen Zeichnung näher erläutert. Es zeigen:
- **Fig.1**: eine Nockenwelle für Brennkraftmaschinen mit teilweiser Zylinderabschaltung mit hier beispielhaft vier auf Steckverzahnungen angeordneten und Nockenpaare aufweisen Nabenkörpern, von denen hier wiederum nur beispielhaft zwei mit Festsitz fest und zwei mit Schiebesitz verschiebbar ausgeführt sind,
- **Fig. 2**: in Explosionsdarstellung einen Abschnitt der Nockenwelle gemäß Fig. 1 mit zwei Steckverzahnungen und zwei Nabenkörpern, die auf der Welle alternierend mit Festsitz und Schiebesitz montierbar sind,
- **Fig. 3**: in vergrößerter Darstellung einen Zahneingriff der Verzahnung für die verschiebbaren Nabenkörpers auf der Welle, und
- **Fig. 4**: in ebenfalls vergrößerter Darstellung den Zahneingriff der Verzahnung des anderen Nabenkörpers der Fig. 2 mit Festsitz auf der Welle.

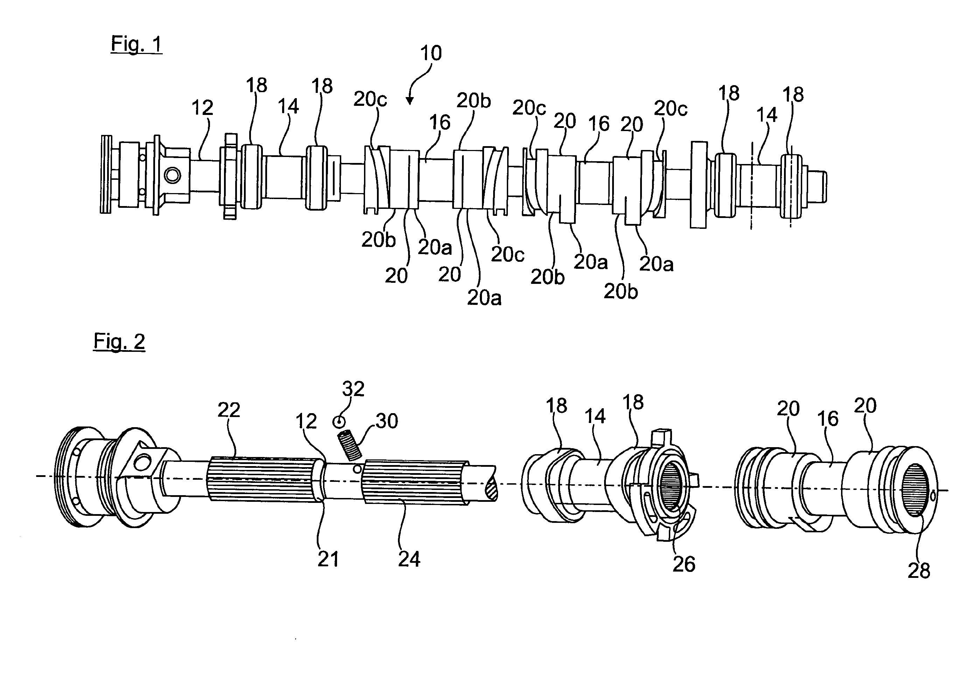

Die Fig. 1 zeigt eine Nockenwelle 10 für eine Brennkraftmaschine mit teilweiser Zylinderabschaltung, die sich im Wesentlichen zusammensetzt aus einer über ein Antriebszahnrad (zum Beispiel Kettenrad, nicht dargestellt) antreibbaren, innern Welle 12, auf der unter anderem vier auf Nabenkörpern 14, 16 ausgebildete Nockenpaare 18, 20 angeordnet sind. Die Nockenwelle 10 ist nur soweit beschrieben, als dies für das Verständnis der vorliegenden Erfindung erforderlich ist.

Die Nockenpaare 18 auf den Nabenkörpern 14 sind einfache Festnocken, die jeweils ein Hubventil des Ventiltriebes der Brennkraftmaschine betätigen.

Die mittleren Nockenpaare 20 sind auf den Nabenkörpern 16 festgelegte Schaltnocken, die jeweils eine Nockenkontur 20a und eine kreissymmetrische, mit dem Nockengrundkreis übereinstimmende Kontur 20b aufweisen. Ferner sind den Nockenpaaren 20 benachbarte Kulissenführungen 20c zugeordnet, mittels denen die Nockenpaare 20 mit den Nabenkörpern 16 axial verschiebbar sind. Dabei greift ein nicht dargestellter Schaltstift alternierend in die eine oder die andere Kulissenführung 20c ein.

Auf der Welle 12 der Nockenwelle 10 sind je Nockenpaar 18, 20 mit deren Nabenkörpern 14, 16 achsparallel ausgerichtete Verzahnungen 22, 24 (vergleiche Fig. 2) eingearbeitet, die mit korrespondierenden Verzahnungen 26, 28 in den Nabenkörpern 14, 16 als in Umfangsrichtung formschlüssige Steckverzahnungen zusammenwirken.

Dabei sind die Verzahnungen 22, 26 für die zwei Nabenkörper 14 als noch zu beschreibende Presspassung ausgeführt, so dass die Nabenkörper 14 mit ihren Nocken 18 nach deren Fügen auf der Welle 12 mit Presssitz gehalten sind und unter anderem keine weitere axiale Sicherung benötigen.

Die Verzahnungen 24, 28 für die zwei Nabenkörper 16 sind als bekannte Verzahnungen gemäß DIN/ISO als Schiebesitz ausgeführt und ermöglichen ein nahezu kraftfreies Aufschieben auf die Welle 12. Zusätzlich zur Verstellung der Schaltnocken 20 mit den Nabenkörpern 16 sind in der Welle 12 über Druckfedern 30 radial nach außen vorgespannte Rastkörper 32 vorgesehen, die im Zusammenwirken mit korrespondierenden Vertiefungen (nicht ersichtlich) in den Nabenkörpern 16 die Nabenkörper 16 mit den Nockenpaaren 20 in der jeweils geschalteten Axialstellung auf der Welle 12 arretieren.

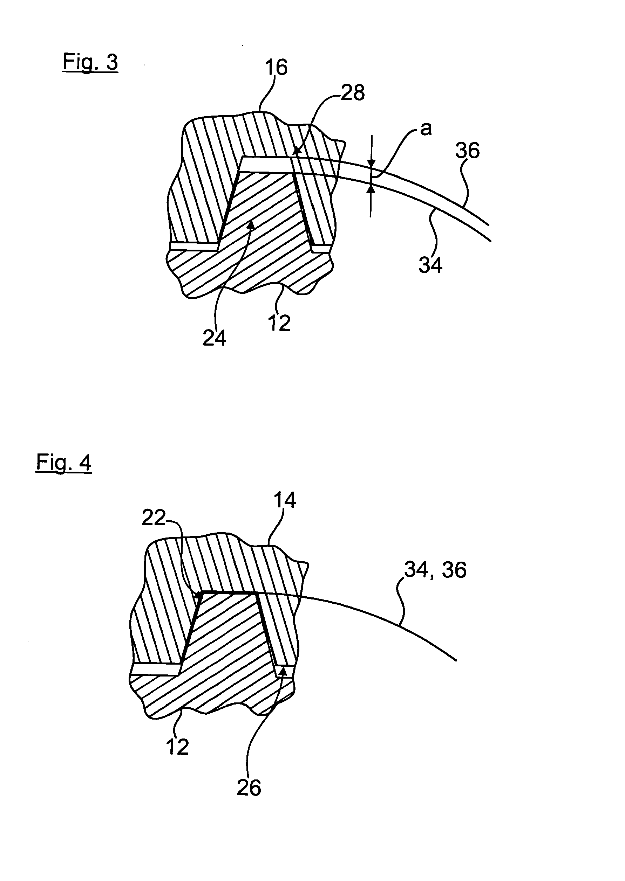

Die Fig. 3 zeigt den Zahneingriff der als Schiebesitz ausgeführten Verzahnungen 24, 28, wobei gemäß der üblichen Verzahnungsparameter ein normales Spiel (Maß a) nach DIN/ISO jeweils zwischen den Zahnköpfen (Zahnkopfkreis 34) und den Zahnfüßen (Zahnfußkreis 36) ausgebildet ist. Die Nabenkörper 16 können somit nahezu kraftfrei auf die Welle 12 bzw. deren Verzahnung 24 aufgeschoben und zur Verstellung des Nockentriebes entsprechend verstellt werden.

Abweichend dazu sind die Zahneingriffe (Fig. 4) der Verzahnungen 22, 26 als Presssitz ausgeführt. Dazu ist der Kopfkreis 34 der Verzahnung 22 auf der Welle 12 mit geringer Überdeckung zum Zahnfußkreis 36 der Verzahnung 26 im Nabenkörper 14 gefertigt.

Bei der Herstellung der Verzahnungen 22, 26 wird zunächst die Verzahnung 22 auf der Welle 12 mit einem geringfügig größeren Zahnkopfkreis 34 ausgewalzt und der Zahnkopfkreis 34 anschließend auf ein Passmaß (bevorzugt u6) geschliffen.

Bei der Verzahnung 26 im Nabenkörper 14 werden die korrespondierenden Zahnfüße bzw. deren Zahnfußkreis 36 mittels einer Räumnadel auf den größeren Zahnkopfkreis 34 angepasst, bevorzugt mit einem Passmaß H7 (ausgehend jeweils von einem gemeinsamen Nennmaß). Die relativ geringe Überdeckung zwischen Zahnkopfkreis 34 und Zahnfußkreis 36 reicht aus, um sowohl die axiale Lage der Nabenkörper 14 auf der Welle 12 zu sichern, als auch im Nockentrieb auftretende Wechselmomente ohne Relativbewegungen durch Zahnspiel abzustützen.

Zur Montage der Nabenkörper 14 mit den Nocken 18 auf die Verzahnungen 22 der Welle 12 wird die Welle 12 gekühlt und zugleich der Nabenkörper 14 mit den Nocken 18 erhitzt. Die Erwärmung der Nabenkörper 14 kann durch die relativ geringe Überdeckung mit der Passung H7/u6 niedrig gehalten werden, so dass keine Verzüge oder Härteverluste an den bereits passgenau gefertigten Nockenpaaren 18 auftreten. Dabei können die in Montagerichtung zuerst zu positionierenden Nabenkörper 14 (auf der Zeichnung Fig. 1 linksseitig) über die davor liegenden Verzahnungen 22 und 24 problemlos übergeschoben werden und sitzen nach der Temperaturangleichung zwischen Welle 12 und Nabenkörper 14 fest.

Anstelle des Querpressverbandes (Aufschrumpfen) können die Nabenkörper 14 auf den Verzahnungen 22 auch als Längspressverband ausgeführt sein. In diesem Falle können an den Verzahnungen 22 in Montagerichtung jeweils vorne liegende Einlaufschrägen 21 (konische Verjüngungen) vorgesehen sein, die ein Auffädeln der Nabenkörper 14 auf die Verzahnungen 22 der Welle 12 begünstigen. Die Einlaufschrägen 21 könnten gegebenenfalls auch an den Innenverzahnungen 26 der Nabenkörper 14 ausgebildet sein. Ein mögliches Fressen im Presssitz kann durch Verwendung eines geeigneten Schmier- bzw. Trennmittels (öl- bzw. wasserbasiert) sicher verhindert werden.

Die Erfindung ist nicht auf das dargestellte Ausführungsbeispiel beschränkt. Anstelle der angegebenen Presspassung H7/u6 kann auch eine andere geeignete Passung verwendet werden.

Anstelle von Nockenpaaren auf einem Nabenkörper können auch Einzelnocken oder eine Kombination mit Einzelnocken und Nockenpaaren entsprechend verbaut sein. Ferner können neben Nocken oder Nockenpaaren gegebenenfalls auch andere Funktionsteile der Nockenwelle, zum Beispiel Antriebsexcenter, etc. wie vorbeschrieben mit einem Presssitz auf der Verzahnung 22 der Welle 12 befestigt sein.

Die Schaltnocken 20 können auch so ausgeführt sein, dass anstelle einer Zylinderabschaltung verschiedene Nockenkonturen zur Erzielung einer variablen Ventilsteuerung vorgesehen sind.

## Patentansprüche

1. Gebaute Nockenwelle für ventilgesteuerte Brennkraftmaschinen, bei der ein wenigstens einen Nocken (18) aufweisender Nabenkörper (14) mittels einer Steckverzahnung in Umfangsrichtung mittels einer Formschlussverbindung formschlüssig auf einer Welle (12) gehalten ist, wobei die Steckverzahnung eine auf der Welle (12) ausgebildete Wellenverzahnung (22) aufweist, die mit einer in einer Nabenkörperausnehmung ausgebildeten Nabenkörperverzahnung (26) zusammenwirkt, und wobei der wenigstens eine Nabenkörper (14) zusätzlich zu der umfangsseitigen Formschlussverbindung mit einem Festsitz auf der Welle (12) gehalten ist, der durch einen zwischen einem Kopfkreis der Wellenverzahnung (22) und einem Fußkreis der Nabenkörperverzahnung (26) ausgebildeten Presssitz hergestellt ist, **dadurch gekennzeichnet, dass** die Welle (12) wenigstens eine weitere, Bestandteil einer einen Schiebesitz ausbildenden Steckverzahnung bildende Wellenverzahnung (24) aufweist, mit der ein wenigstens einen Nocken (20) aufweisender Schiebesitz-Nabenkörper (16) über eine in der Nabenkörperausnehmung ausgebildete Nabenkörperverzahnung (28) so zusammenwirkt, dass der Schiebesitz-Nabenkörper (16) axial verschiebbar auf der Welle (12) gehalten ist und dass der wenigstens eine Festsitz-Nabenkörper (14) und der wenigstens eine Schiebesitz-Nabenkörper (16) zur Ausbildung gleicher oder einheitlicher Verzahnungsparameter annähernd gleiche Maße und eine annähernd gleiche Ausgestaltung der jeweiligen Steckverzahnungsbereiche aufweisen.

2. Nockenwelle nach Anspruch 1, **dadurch gekennzeichnet, dass** zur Herstellung des Festsitzes der Kopfkreisdurchmesser (34) der Wellenverzahnung (22) gegenüber einem Nennmaß vergrößert und/oder der Fußkreisdurchmesser (36) der Nabenkörperverzahnung (26) gegenüber diesem Nennmaß verkleinert ist.

3. Nockenwelle nach Anspruch 1 oder 2, **dadurch gekennzeichnet, dass** bei der Fertigung der Wellenverzahnung (22) der Kopfkreisdurchmesser (34) auf Passung geschliffen und/oder bei der Fertigung der Nabenkörperverzahnung (26) der Fußkreisdurchmesser (36) auf Passung geräumt ist.

4. Nockenwelle nach einem der vorhergehenden Ansprüche, **dadurch gekennzeichnet, dass** die den Festsitz bewirkenden Verzahnungen (22, 26) auf eine Presspassung im übergangspassungsnahen Bereich gefertigt sind, insbesondere mit einer geringeren Überdeckung, bevorzugt auf H7/r6 oder H7/s6 oder H7/u6, gefertigt sind als eine ohne Steckverzahnung ausgebildete und ein gleiches Betriebsmoment übertragende Welle-Nabe-Verbindung.

5. Nockenwelle nach einem der vorhergehenden Ansprüche, **dadurch gekennzeichnet, dass** die Wellenverzahnung (22), insbesondere bei einem Fügen im Längspressverband mit einer Einlaufschräge (21) ausgeführt ist.

6. Nockenwelle nach einem der vorhergehenden Ansprüche, **dadurch gekennzeichnet, dass** zur Herstellung einer unbeschädigten Festsitzverbindung beim Überschieben identischer Festsitz-Wellenabschnitte ein Trenn- bzw. Schmiermittel vorgesehen ist, das beim Überschieben im Fügespalt angeordnet ist.

7. Nockenwelle nach einem der vorhergehenden Ansprüche, **dadurch gekennzeichnet, dass** eine wellenseitige Schaltverzahnung so ausgebildet ist, dass der wenigstens eine mit einem Festsitz auf der Welle (12) festzulegende Nabenkörper (14) mit einem definierten Spiel zur Schaltverzahnung auf die Welle (12) aufzuschieben ist.

## Claims

1. Assembled camshaft for valve-controlled internal combustion engines, in which a hub body (14), which comprises at least one cam (18), is interlockingly held on a shaft (12) by means of a positive fit by means of a spline in the circumferential direction, the spline comprising a shaft toothing (22) which is formed on the shaft (12) and cooperates with a hub body toothing (26) formed in a hub body recess, and the at least one hub body (14) being held on the shaft (12) by an interference fit in addition to the circumferential positive fit, which interference fit is produced by a press fit formed between a tip circle of the shaft toothing (22) and a root circle of the hub body toothing (26), **characterised in that** the shaft (12) comprises at least one further shaft toothing (24) which forms a component of a spline forming a sliding fit, and with which a sliding fit hub body (16), which comprises at least one cam (20), cooperates by means of a hub body toothing (28), which is formed in the hub body recess, in such a way that the sliding fit hub body (16) is held so as to be axially displaceable on the shaft (12) and in such a way that the respective spline regions of the at least one interference fit hub body (14) and the at least one sliding fit hub body (16) have approximately the same dimensions and an approximately identical shape in order to form identical or uniform toothing parameters.

2. Camshaft according to claim 1, **characterised in that**, in order to produce the interference fit, the tip circle diameter (34) of the shaft toothing (22) is increased relative to a nominal value and/or the root circle diameter (36) of the hub body toothing (26) is reduced relative to this nominal value.

3. Camshaft according to either claim 1 or claim 2, **characterised in that**, during manufacture of the shaft toothing (22), the tip circle diameter (34) is ground to create a fit, and/or, during manufacture of the hub body toothing (26), the root circle diameter (36) is broached to create a fit.

4. Camshaft according to any of the preceding claims, **characterised in that** the toothings (22, 26) which bring about the interference fit are manufactured to form a press fit in the region close to the transitional fit, in particular are manufactured to have a low level of overlapping, preferably to H7/r6 or H7/s6 or H7/u6, in the form of a shaft-hub connection which is formed without a spline and transmits an identical operating torque.

5. Camshaft according to any of the preceding claims, **characterised in that** the shaft toothing (22) is configured to have a lead-in chamfer (21), in particular when fitting in the longitudinal interference fit.

6. Camshaft according to any of the preceding claims, **characterised in that**, in order to produce an undamaged interference fit when sliding over identical interference fit shaft portions, a separating agent or a lubricant is provided which is arranged in a joint gap during the sliding.

7. Camshaft according to any of the preceding claims, **characterised in that** a shaft-side shift toothing is formed such that the at least one hub body (14), which is to be fixed to the shaft (12) by means of an interference fit, can be slid onto the shaft (12) so as to have defined play relative to the shift toothing.

## Revendications

1. Arbre à cames assemblé pour moteurs à combustion interne à commande par soupapes, dans lequel un corps de moyeu (14) présentant au moins une came (18) est maintenu mécaniquement sur un arbre (12) au moyen d'une denture enfichable dans la direction périphérique par une liaison mécanique, dans lequel la denture enfichable présente une denture d'arbre (22) formée sur l'arbre (12), laquelle denture coopère avec une denture de corps de moyeu (26) formée dans une cavité du corps de moyeu, et dans lequel le au moins un corps de moyeu (14) est maintenu, en plus de la liaison mécanique côté périphérique, sur l'arbre (12) par un ajustement bloqué, qui est formé par un ajustement serré formé entre un cercle primitif de la denture d'arbre (22) et un cercle de pied de la denture de corps de moyeu (26), **caractérisé en ce que** l'arbre (12) présente au moins un autre composant d'une denture d'arbre (24) formant une denture enfichable constituant un siège coulissant, avec laquelle un corps de moyeu à siège coulissant (16) présentant au moins une came (20) coopère via une denture de corps de moyeu (28) formée dans la cavité de corps de moyeu de sorte que le corps de moyeu à siège coulissant (16) soit maintenu de manière à pouvoir coulisser sur l'arbre (12) et que le au moins un corps de moyeu à ajustement bloqué (14) et le au moins un corps de moyeu à siège coulissant (16) présentent pour former des paramètres de denture égaux ou unitaires des mesures approximativement égales et une conformation approximativement égale des zones de denture enfichables respectives.

2. Arbre à cames selon la revendication 1, **caractérisé en ce que**, pour assurer l'ajustement bloqué, on renforce le diamètre (34) du cercle primitif de la denture d'arbre (22) vis-à-vis d'une dimension nominale et/ou on réduit le diamètre (36) du cercle de pied de la denture de corps de moyeu (26) vis-à-vis de cette dimension nominale.

3. Arbre à cames selon la revendication 1 ou la revendication 2, **caractérisé en ce que**, lors de la fabrication de la denture d'arbre (22), le diamètre (34) du cercle primitif est meulé jusqu'à ajustement et/ou, lors de la fabrication de la denture de corps de moyeu (26), le diamètre (36) du cercle de pied de denture est broché jusqu'à ajustement.

4. Arbre à cames selon l'une quelconque des revendications précédentes, **caractérisé en ce que** les dentures (22, 26) qui assurent l'ajustement bloqué sont fabriquées avec un ajustement serré dans la zone proche de l'ajustement de transition, en particulier elles sont fabriquées avec un recouvrement plus petit, de préférence sur H7/r6 ou H7/s6 ou H7/u6, qu'une liaison arbre-moyeu formée sans denture enfichable et transmettant un même moment de service.

5. Arbre à cames selon l'une quelconque des revendications précédentes, **caractérisé en ce que** la denture d'arbre (22) est réalisée, en particulier dans le cas d'une jonction dans le joint à ajustement serré longitudinal, avec un chanfrein d'entrée (21).

6. Arbre à cames selon l'une quelconque des revendications précédentes, **caractérisé en ce qu'**il est prévu, pour la fabrication d'une liaison à ajustement bloqué intacte, lors du chevauchement de sections d'arbre à ajustement bloqué identiques, un moyen de séparation ou de lubrification qui est aménagé lors du chevauchement dans l'intervalle de jonction.

7. Arbre à cames selon l'une quelconque des revendications précédentes, **caractérisé en ce qu'**une denture de distribution côté arbre est conçue de manière que le au moins un corps de moyeu (14) se fixant sur l'arbre (12) avec un ajustement bloqué soit soumis à un coulissement avec un jeu défini avec la denture de distribution sur l'arbre (12).
